# EUROPEAN PATENT SPECIFICATION

(11) **EP 1 142 470 B1**
(45) Date of publication and mention of the grant of the patent: **02.03.2005**
(21) Application number: 01201293.6
(22) Date of filing: 09.04.2001
(51) Int. Cl.: A01J 25/16, F24F 6/14, A23L 3/3418

(54) **Air conditioning apparatus**
Luftbehandlungsanlage
Appareil de conditionnement d'air

(30) Priority: 07.04.2000 NL 1014873
(43) Date of publication of application: 10.10.2001
(73) Proprietor: GTI Koudetechniek B.V., 9723 BP Groningen (NL)
(72) Inventor: Viswat, Eppo, 9761 AE Eelde (NL)
(74) Representative: Prins, Adrianus Willem, Mr. Ir.

(56) References cited:
- EP-A- 0 632 240
- WO-A-95/22724
- FR-A- 2 629 305
- FR-A- 2 751 509
- US-A- 1 987 188
- US-A- 2 834 188

## Description

This invention relates to an air treatment apparatus for treating air in a conditioning space for foods.

Some types of foods must be stored under accurately controlled conditions as regards temperature and humidity. During storage, often a ripening process takes place as well. An example is the storage of cheese in conditioned cheese stores. It is of great importance that the conditioned air in such storage spaces be pure. This is especially important for sensitive products, such as soft cheese on which a fungal and/or bacterial culture is present. If such cheese is exposed to contaminated air, the cheese may become completely useless within a very short time. Therefore, in practice, prior to the conditioning of a batch of such foods, the air treatment apparatus must be cleaned.

Known air treatment apparatuses cool the air present in a conditioning space or storage space by means of a heat exchanger arranged in the air treatment apparatus, this heat exchanger comprising a pipe system with fins having a heat transferring liquid flowing therethrough. The pipe system with fins is in heat exchanging contact with the air in the conditioning space. Although with this apparatus the temperature in the conditioning space can be properly controlled, it has as a drawback that cleaning the heat exchanger is cumbersome. As a consequence, the costs of maintenance are high and the risk of decay of the products as a result of insufficient cleaning of the plant in the conditioning space is also high.

From WO-A-95/22724, an air treatment apparatus of the above-described type is known. This apparatus comprises mass transfer units placed in the air treatment space, whose function is to collect the fluid distributed in the treatment space and to spread it over a large surface for the purpose of transfer to the atmosphere flowing there along. To that end, such elements are designed as a gauze or a foam. Although the use of these elements improves the heat transfer to the atmosphere, the flow resistance through the treatment space is increased considerably. Further, it is disadvantageous that the elements are difficult to clean, and that especially in situ cleaning is difficult or impossible. In addition, the elements, due to their very structure, create an environment potentially conducive to accumulation of dirt and bacterial growth.

FR-A-2629305 discloses a conditioning tunnel for cheese, provided with a ventilation system placed on top of the tunnel. The tunnel forms a product space and is provided with cleaning nozzles, but an air treatment apparatus as such is not disclosed.

The object of the invention is to provide an air treatment apparatus which is simple to clean without adversely affecting the effectiveness of the air treatment apparatus. To that end, the invention provides an apparatus according to claim 1.

According to the invention, the air in the conditioning space is cooled by passing the air through an air treatment space of the air treatment apparatus in which water is sprayed. As a consequence, the air treatment apparatus can be so designed that it can be cleaned in a simple manner. What is achieved in that the treatment space in which the working liquid is sprayed is a substantially free space, is that the flow of the air through the treatment space is little obstructed, and that cleaning the space is considerably simplified. Further, due to the free treatment space, there are few locations within the treatment space where dirt can accumulate.

Cleaning the air treatment apparatus is further simplified when the sprayers arranged in the air treatment space are at the same time designed as cleaning sprayers.

The invention will be further elucidated on the basis of a detailed description of an exemplary embodiment of the invention, with reference to the drawings. In the drawings:
Fig. 1 shows a front view in cross section of an air treatment apparatus according to the invention,
Fig. 2 shows a side elevation in cross section of the apparatus of Fig. 1,
Fig. 3 shows a storage arrangement according to the invention,
Fig. 4 shows a diagram of a pipe system according to the invention.

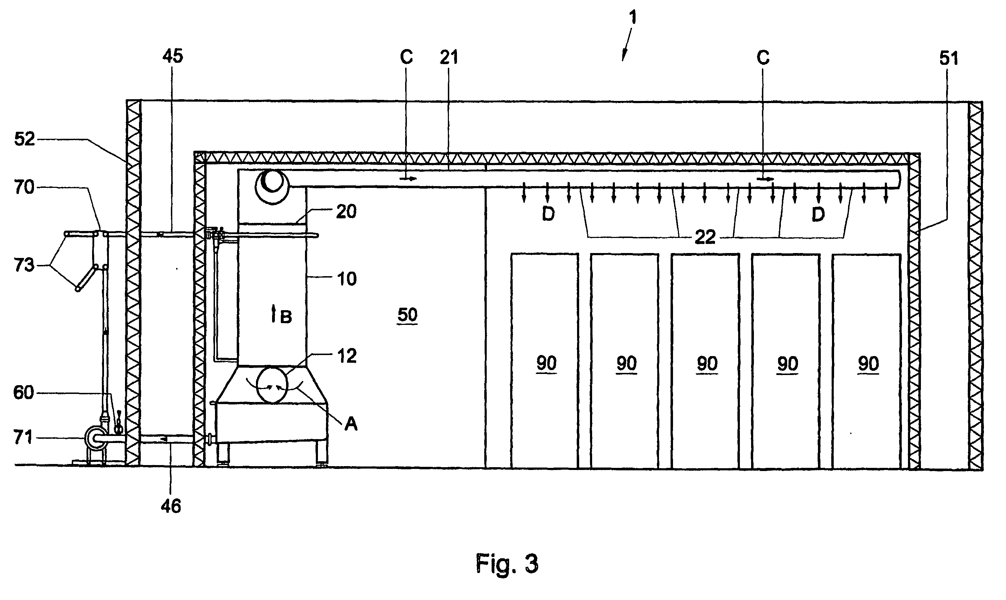

In Fig. 3 an exemplary embodiment of a storage arrangement 1 according to the invention is shown. The storage arrangement 1 comprises a conditioning space 50, which is defined by an insulated inner wall 51. The inner wall is surrounded by a likewise insulated outer wall 52. Between the inner wall 51 and the outer wall 52 some space is present with conditioned air to limit the heat load on the conditioning space 50. In the conditioning space 50, further, a number of storage racks 90 are present, in which cheeses (not shown) are stored. Such storage racks 90 are known as such from practice. In the conditioning space 50, furthermore, an air treatment unit 10 is present, provided with air inlets 11, 12 through which air is brought from the conditioning space 50 into the air treatment unit 10 in order to be treated. The air treatment unit 10 is provided with an outlet 20 for discharging air processed by the air treatment unit 10, which outlet 20 terminates in distribution channels 21 having outlets 22 located adjacent the storage racks 90. If desired, the outlets 22 can be formed by an open woven, such as, for instance, a so-called airsock, whereby the air is forced through the open woven, while water drops possibly present in the air remain behind in the woven.

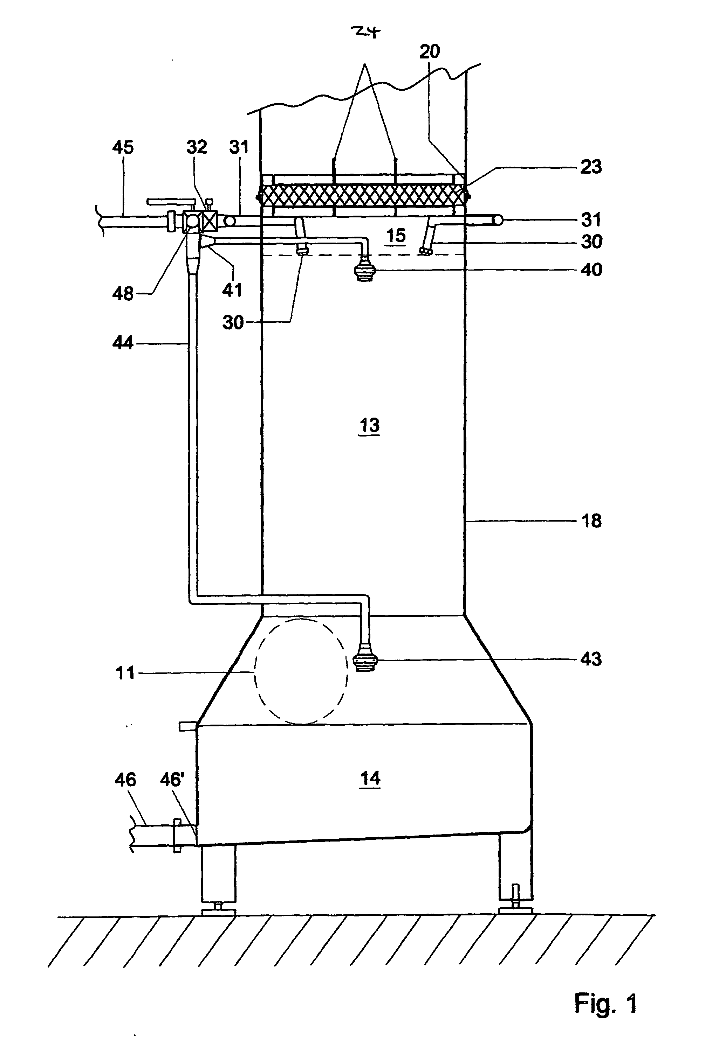

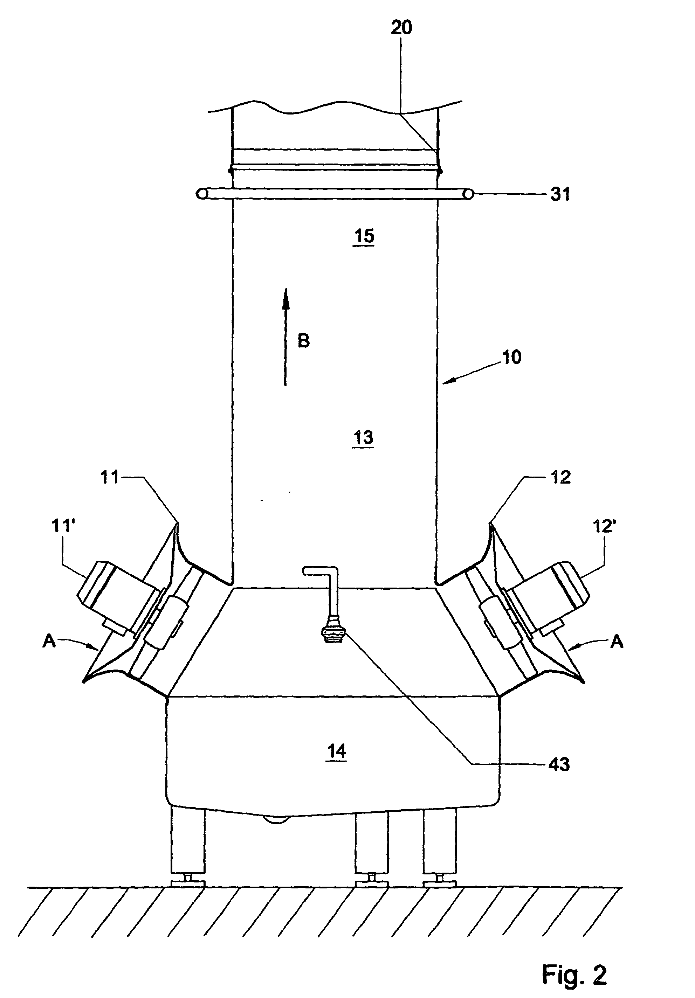

In Figs. 1 and 2 the air treatment unit 10 is shown in more detail. The air treatment unit 10 has a substantially hollow columnar housing 18, in this example made of stainless steel, having therein a central air treatment space 13. At the bottom of the air treatment space 13, an inlet space 14 links up with the air treatment space, and at the top of the air treatment space 13, an outlet space 15 links up with the air treatment space 13. The interior of the housing 18 is shaped in such a manner, for instance with rounded corners and round constructional details, that it can be cleaned very effectively.

The housing 18 is provided with a number, two in this example, of inlet openings 11 and 12 which communicate with the inlet space 14. The inlet openings 11 and 12 are provided with fans 11' and 12', respectively; the fans 11' and 12' are disposed for bringing air from the conditioning space 50 into the inlet space 14.

In the outlet space 15, three spray heads 30 are arranged, such that they are directed to the air treatment space 13. The spray heads 30 communicate, via a feed pipe 31, with a supply valve 32. The supply valve 32 is connected with a supply pipe 45. The spray heads 30 are designed to spray liquid, in this case water, so that small water particles enter the space 13. The spray heads 30 are so designed that they can also spray supplied cleaning liquid which is used for cleaning the air treatment unit 10. Such spray heads are known from practice, so that, for brevity, a detailed description is omitted.

At the top, the outlet space 15 has an outlet 20 in which a drip tray 23 is arranged, designed to be removable by means of grips 24. The drip tray 23 is arranged to allow an air stream to pass, whilst relatively small water particles entrained by the air stream are captured by the drip tray 23. Such drip trays are known from practice, so that, for brevity, a detailed description is omitted.

In the housing 18, a lower round-headed sprayer 43 is arranged, in the area of the inlet space 14. The round-headed sprayer 43 has several outlets, which are directed such that in operation the round-headed sprayer 43 can spray a cleaning liquid over the entire inner wall of the inlet space 14 and a lower part of the air treatment space 13 of the housing 18. The round-headed sprayer 43 is connected with the supply pipe 45 via a pipe 44 and a valve 48.

In the housing 18, further, an upper round-headed sprayer 40 is arranged, located in the area of the outlet space 15, in this example slightly below the level of the spray heads 30. The round-headed sprayer 40 has several outlets, which are directed such that in operation the round-headed sprayer 40 can spray a cleaning liquid over the entire inner wall of the outlet space 15 and an upper part of the air treatment space 13 of the housing 18. The round-headed sprayer 40 is connected via a pipe 41 with the pipe 44.

Although in this example round-headed sprayers are used for distributing cleaning liquid, the invention is not limited to these sprayers. The invention provides the use of other means suitable for distributing cleaning liquid in the housing 18, such as, for instance, a rotary spout.

The supply pipe 45 is connected with a first end of a first circuit of a heat exchanger 70. In this example, the heat exchanger 70 is of the type having two circuits in heat transferring communication with each other. Incidentally, the invention is not limited to such a heat exchanger, and according to the invention other heat exchangers can also be used. The other end of the first circuit of the heat exchanger 70 is connected by means of a pump 71 and a pipe 46 with an outlet 46' located in a bottom part of the housing 18. The outlet 46' is placed in the bottom of the housing 18 such that liquid can drain from the housing 18 via the outlet 46'.

The second circuit of the heat exchanger 70 is in contact with a cold water source 73, with liquid being displaced in the second circuit by means of a pump 72. The pump 72 is connected with control means 81; the control means 81 are in addition connected with a sensor 80 arranged in the space 50, for measuring the air humidity and the temperature of the air in the space 50.

At a position between the pump 71 and the outlet 46' the pipe 46 is connected with a pipe 62. The pipe 62 communicates via a valve 61 with a cleaning liquid supply 60.

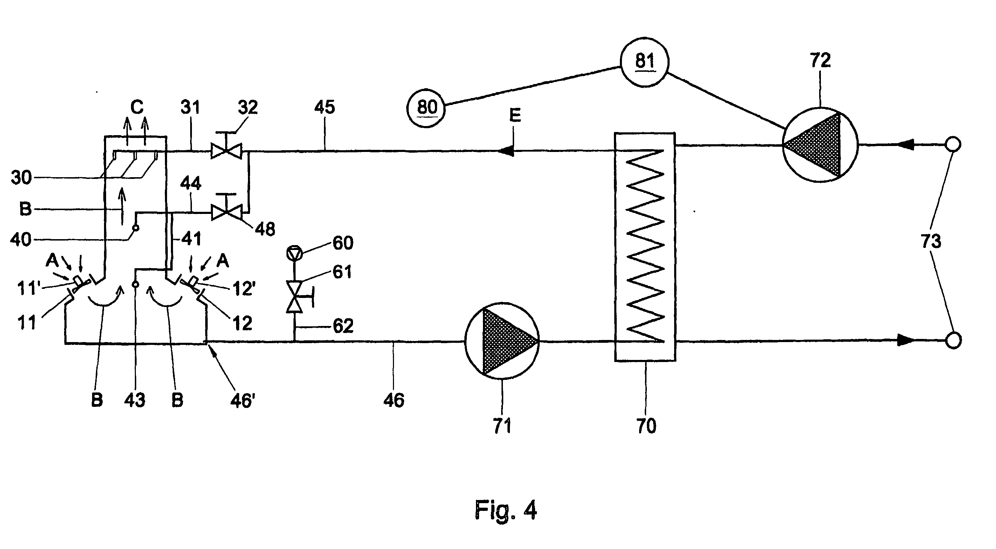

In operation, the fans 11' and 12' are switched on, such that they draw in air from the space 50, as indicated with the arrows A in Figs. 3 and 4, and bring the air within the housing 18 of the air treatment unit 10. The air stream through the housing 18 passes in vertical direction as indicated with the arrows B; the air exits from the air treatment space 13 via the outlet 20 as indicated with the arrows C. The air is subsequently led through the distribution channel 21 to above the storage racks 90 and brought via the outlets 22 into the space 50, as indicated by the arrows D.

In operation, the pump 71 takes care of water being pumped round in a circuit which is formed by the pipe 46, the first circuit of the heat exchanger 70, the pipe 45, the sprayers 30, the air treatment space 13, and the outlet 46' which links up with the pipe 46. Water has been introduced into this circuit of the pump 71 by water supply means, not shown. The pump 72 forms part of a second circuit which is formed between the second circuit of the heat exchanger and the cold water source 73.

During the flow of air through the air treatment space 13, the pump 71 is switched on, so that water starts to flow through the first circuit of the heat exchanger 70 through the pipe 45 in the direction indicated by an arrow E in Fig. 4, through the opened valve 32, then through the pipe 31 to the sprayer heads 30, while both the valve 48 and the valve 61 are closed. The pump 72 is also switched on, so that cold water runs through the second circuit of the heat exchanger 70. What is thereby achieved is that the water flowing through the circuit of the pump 71 is cooled by the heat exchanger 70.

In the spray heads 30 the water cooled by the heat exchanger 70 is reduced to a spray and sprayed as fine particles into the air treatment space 13. The air stream B is cooled by the water drops present in the air treatment space, whereby the relative air humidity of the air in the space 13 increases. Depending on the extent to which the air stream B is cooled, the air can be dehumidified or be humidified.

Based on the temperature and air humidity of the space 50 as measured by the sensor 80, the control 81, in this example, controls the pump 72, and hence the supply of liquid to the second circuit of the heat exchanger 70. In this example, the liquid source 73 is ice water, with which the water supplied by the pump 71 is cooled in the heat exchanger 70. Incidentally, the invention is not limited to this use, and for the liquid source 73 a different source can be chosen, such as, for instance, a different cold carrier or evaporative cold agent or a hot water source, all this depending on the desired space conditions.

Through gravity, a large part of the water introduced into the housing 18 by the sprayers 30 eventually ends up in the lower part of the housing, where, under the influence of gravity, it ends up via the outlet 46' in the pipe 46, thereby closing the circle of the circuit.

The temperature and the air humidity of the air blown into the conditioning space can be controlled by controlling the temperature of the water in pipe 45. The invention provides that, if desired, a heating device is placed in the outlet 20 to additionally raise the temperature of the air treated.

To clean the air treatment unit 10, first the fans 11 and 12 are switched off to stop the air flow through the treatment unit 10. Next, the valve 61 is opened, so that cleaning liquid is introduced into the pipe 46. In the manner described hereinabove, the pump 71 passes the liquid already present, mixed with the cleaning liquid, through the pipe 45 to the sprayers 30. If desired, first the water can be removed from the circuit of the pump 71, so that the cleaning liquid is used unmixed. As a result of the sprayers 30 spraying cleaning liquid, a proper cleaning is obtained of the interior of the housing, the pipes 45, 46, the sprayers 30 themselves, the pump 71 and the first circuit of the heat exchanger 70.

To obtain a further cleaning of areas not covered, or hardly so, by the sprayers 30, next the valve 32 is closed and valve 48 is opened. The cleaning liquid is thereby passed to the round-headed sprayers 40 and 43.

By the round-headed sprayers 40 and 43, the cleaning liquid is sprayed over the entire inner wall of the housing 18, so that the entire inner wall is cleaned. The cleaning liquid is displaced downwards through gravity, where it is discharged through the outlet 46' via the pipe 46 and is pumped round in the manner described hereinbefore. If desired, the cleaning liquid can be modified in temperature by means of the heat exchanger 70 or a separate heat exchanger. The circulation of the cleaning liquid as described here is continued for a particular time until the apparatus 10 is sufficiently cleaned. Next, the valve 61 is closed and the apparatus 10 is flushed and provided with water. After closing of the valve 48 and opening of valve 32, the usual operation can take place again.

Although in the example described it has been assumed there is a supply device for cleaning agent to the liquid circuit in the form of a cleaning agent supply 60 connected directly with the liquid circuit, the invention is not limited to this embodiment mentioned by way of example. The invention further provides other suitable supply devices such as for instance a closable supply opening in the wall of the air treatment apparatus, through which cleaning liquid is introduced at the bottom of the air treating apparatus and thus is included in the liquid circuit.

Although in the example described, it has been assumed there are loose round-headed sprayers for distributing the cleaning liquid, the invention is not limited to this embodiment. The invention also provides for the introduction of the cleaning liquid, during cleaning, into the air treatment space without the supplemental round-headed sprayers, viz. via the sprayers 30. This has as an advantage that the apparatus can be made of simpler design.

If desired, cleaning can also take place in the manner described hereinbefore, but with the valve 32 remaining open during cleaning. If desired, the cleaning process can comprise a combination of the steps described hereinbefore.

Although the invention is suitable in particular for use in a conditioning arrangement for products which are treated or stored at a high relative air humidity, such as for instance soft cheese, the invention is not limited to this use mentioned by way of example. The invention can also be employed for other uses, for instance in storing foods, growing and storing mushrooms, and in ripening hams.

## Claims

1. An air treatment apparatus for treating air in a conditioning space for foods, comprising
at least one air inlet (11, 12) for bringing air from the conditioning space (50) into the air treatment apparatus (10),
an air outlet (20), for discharging air processed by the air treatment apparatus (10) to the conditioning space (50), and
an air treatment space (13) located between the air inlet (11, 12) and the air outlet (20),
air transport means (11',12') associated with the air inlet (11, 12) and disposed for displacing air in a vertical direction (B) from the air inlet (11, 12) to the air outlet (20) via the air treatment space (13),
spray means (30), arranged for spraying liquid into the air treatment space, the spray means being connected with a liquid circuit provided with a heat exchanger for adjusting the temperature of liquid supplied to the spray means,
wherein the liquid circuit is connected to an outlet (46') at the lower part of the air treatment space (13) for draining liquid from the air treatment apparatus, and is provided with a supply device (60, 61, 62) for cleaning agent, and
wherein the air treatment space (13) is a substantially free unobstructed space.

2. An apparatus according to claim 1, **characterized in that** the spray means comprise at least one spray head (40, 43), located in an upper portion of the air treatment space.

3. An apparatus according to claim 2, **characterized in that** the air treatment space is elongated in vertical direction.

4. An apparatus according to any one of the preceding claims, **characterized by** a spray head connected with the liquid circuit, arranged for spraying a cleaning liquid into the air treatment space.

5. An apparatus as claimed in any one of the preceding claims, **characterized in that** the apparatus has a substantially hollow columnar housing (18) having a lower inlet space provided with at least one air inlet opening (11, 12), and having an upper air outlet space (15), and a substantially unobstructed air treatment space (13) between the inlet space and the outlet space, the interior of the housing (18) having a rounded shape for effective cleaning.

6. An apparatus according to any one of the preceding claims, **characterized in that** air transport means comprise at least one fan (11', 12') placed adjacent the air inlet (11, 12).

7. An apparatus according to any one of the preceding claims, **characterized by** a drip tray (23), placed beyond the air outlet (20).

8. An apparatus according to any one of the preceding claims, **characterized in that** the air outlet terminates in air distribution channels (21) having outlets (22) to the conditioning space, said outlets being provided with an air permeable open woven, material.

9. An apparatus according to any one of the preceding claims, **characterized by** a heating device connected with the air outlet.

10. A storage arrangement for foods, comprising a conditioning space (50) and an air treatment apparatus (10) according to any one of claims 1-9, for treating the air in the conditioning space.

11. A storage arrangement according to claim 10, **characterized in that** the air treatment apparatus (10) is placed in the conditioning space (50).

12. A storage arrangement according to claim 10, **characterized in that** the air treatment apparatus (10) is placed outside the conditioning space (50).

13. A storage arrangement according to any one of claims 10-12, **characterized by** air inlets (22) connected to the air outlet (20) of the apparatus (10) and located adjacent a storage rack placed in the conditioning space (50).

## Patentansprüche

1. Luftbehandlungsanlage zum Behandeln von Luft in einem Klimatisierungsraum für Lebensmittel, umfassend:
mindestens einen Lufteinlaß (11, 12) zum Einleiten von Luft aus dem Klimatisierungsraum (50) in die Luftbehandlungsanlage (10),
einen Luftauslaß (20) zum Ableiten von Luft, welche durch die Luftbehandlungsanlage (10) behandelt wurde, in den Klimatisierungsraum (10), und
einen Luftbehandlungsraum 13, welcher zwischen dem Lufteinlaß (11, 12) und dem Luftauslaß (20) angeordnet ist,
eine Luftbeförderungseinrichtung (11', 12'), welche mit dem Lufteinlaß (11, 12) verbunden ist und geeignet angeordnet ist, um Luft in einer vertikalen Richtung (B) durch den Luftbehandlungsraum (13) von dem Lufteinlaß (11, 12) zu dem Luftauslaß (20) zu drängen,
eine Sprüheinrichtung (30), welche geeignet eingerichtet ist, um eine Flüssigkeit in den Luftbehandlungsraum zu sprühen, wobei die Sprüheinrichtung mit einem Flüssigkeitskreislauf verbunden ist, welcher mit einem Wärmetauscher versehen ist, um die Temperatur der Flüssigkeit, mit welcher die Sprüheinrichtung versorgt wird, abzustimmen,
wobei der Flüssigkeitskreislauf mit einem Auslaß (46') an dem unteren Abschnitt des Luftbehandlungsraums (13) verbunden ist, um Flüssigkeit aus der Luftbehandlungsanlage abzuleiten, und mit einer Versorgungsvorrichtung (60, 61, 62) für ein Reinigungsmittel versehen ist, und wobei der Luftbehandlungsraum (13) im wesentlichen ein freier, unversperrter Raum ist.

2. Anlage nach Anspruch 1, **dadurch gekennzeichnet, daß** die Sprüheinrichtung mindestens einen Sprühkopf (40, 43) umfaßt, welcher in einem oberen Abschnitt des Luftbehandlungsraums angeordnet ist.

3. Anlage nach Anspruch 2, **dadurch gekennzeichnet, daß** der Luftbehandlungsraum in einer vertikalen Richtung länglich gestreckt ist.

4. Anlage nach einem der vorangehenden Ansprüche, **gekennzeichnet durch** einen Sprühkopf, welcher mit dem Flüssigkeitskreislauf verbunden ist, welcher geeignet eingerichtet ist, um eine Reinigungsflüssigkeit in den Luftbehandlungsraum zu sprühen.

5. Anlage nach einem der vorangehenden Ansprüche, **dadurch gekennzeichnet, daß** die Anlage ein im wesentlichen hohles, säulenförmiges Gehäuse (18) aufweist, welches einen unteren Einlaßraum aufweist, welcher mit mindestens einer Lufteinlaßöffnung (11, 12) versehen ist, und einen oberen Auslaßraum (15) sowie einen im wesentlichen unversperrten Luftbehandlungsraum (13) zwischen dem Einlaßraum und dem Auslaßraum aufweist, wobei das Innere des Gehäuses (18) eine gerundete Gestalt zur wirksamen Reinigung aufweist.

6. Anlage nach einem der vorangehenden Ansprüche, **dadurch gekennzeichnet, daß** eine Luftbeförderungseinrichtung mindestens ein Gebläse (11', 12') umfaßt, welches an den Lufteinlaß (11, 12) angrenzend angeordnet ist.

7. Anlage nach einem der vorangehenden Ansprüche, **gekennzeichnet durch** einen Tropfbehälter (23), welcher hinter dem Luftauslaß (20) angeordnet ist.

8. Anlage nach einem der vorangehenden Ansprüche, **dadurch gekennzeichnet, daß** der Luftauslaß in Luftverteilungskanälen (21) endet, welche Auslässe (22) zu dem Klimatisierungsraum aufweisen, wobei die Auslässe mit einem luftdurchlässigen offenen Gewebe versehen ist.

9. Anlage nach einem der vorangehenden Ansprüche, **gekennzeichnet durch** eine Heizvorrichtung, welche mit dem Luftauslaß verbunden ist.

10. Lagerungseinrichtung für Lebensmittel, umfassend einen Klimatisierungsraum (50) und eine Luftbehandlungsanlage (10) nach einem der Ansprüche 1 - 9, um die Luft in dem Klimatisierungsraum zu behandeln.

11. Lagerungseinrichtung nach Anspruch 10, **dadurch gekennzeichnet, daß** die Luftbehandlungsanlage (10) in dem Klimatisierungsraum (50) angeordnet ist.

12. Lagerungseinrichtung nach Anspruch 10, **dadurch gekennzeichnet, daß** die Luftbehandlungsanlage (10) außerhalb des Klimatisierungsraums (50) angeordnet ist.

13. Lagerungseinrichtung nach einem der Ansprüche 10 - 12, **gekennzeichnet durch** Lufteinlässe (22), welche mit dem Luftauslaß (20) der Anlage (10) verbunden sind und angrenzend an ein Lagergestell, welches in dem Klimatisierungsraum (50) angeordnet ist, angeordnet sind.

## Revendications

1. Appareil de traitement d'air destiné à traiter l'air dans un espace de conditionnement d'aliments, comprenant :
au moins une admission d'air (11, 12) destinée à amener l'air depuis l'espace de conditionnement (50) dans l'appareil de traitement d'air (10),
une évacuation d'air (20) destinée à évacuer l'air traité par l'appareil de traitement d'air (10) dans l'espace de conditionnement (50), et
un espace de traitement d'air (13) situé entre l'admission d'air (11, 12) et l'évacuation d'air (20),
un moyen de transport d'air (11', 12') associé à l'admission d'air (11, 12) et agencé pour déplacer l'air dans une direction verticale (B) depuis l'admission d'air (11, 12) jusqu'à l'évacuation d'air (20) via l'espace de traitement d'air (13),
un moyen de vaporisation (30), agencé pour vaporiser un liquide dans l'espace de traitement d'air, le moyen de vaporisation étant connecté à un circuit liquide doté d'un échangeur de chaleur destiné à ajuster la température du liquide conduit au moyen de vaporisation,
dans lequel le circuit liquide est relié à une évacuation (46') sur la partie inférieure de l'espace de traitement d'air (13) destinée à vidanger le liquide depuis l'appareil de traitement d'air, et est doté d'un dispositif de conduite (60, 61, 62) pour agent de nettoyage, et dans lequel l'espace de traitement d'air (13) est sensiblement exempt d'espace non obstrué.

2. Appareil selon la revendication 1, **caractérisé en ce que** le moyen de vaporisation comprend au moins une tête de vaporisation (40, 43) située dans une partie supérieure de l'espace de traitement d'air.

3. Appareil selon la revendication 2, **caractérisé en ce que** l'espace de traitement d'air est allongé dans une direction verticale.

4. Appareil selon l'une quelconque des revendications précédentes, **caractérisé par** une tête de vaporisation reliée au circuit de liquide, agencée pour vaporiser un liquide de nettoyage dans l'espace de traitement d'air.

5. Appareil selon l'une quelconque des revendications précédentes, **caractérisé en ce que** l'appareil possède un logement en colonne sensiblement creux (18) possédant un espace d'admission inférieur doté d'au moins un orifice d'admission d'air (11, 12), et possédant un espace d'évacuation d'air supérieur (15), et un espace de traitement d'air sensiblement non obstrué (13) entre l'espace d'admission et l'espace d'évacuation, l'intérieur du logement (18) possédant une forme arrondie pour un nettoyage efficace.

6. Appareil selon l'une quelconque des revendications précédentes, **caractérisé en ce que** le moyen de transport d'air comprend au moins un ventilateur (11', 12') placé de manière adjacente à l'admission d'air (11, 12).

7. Appareil selon l'une quelconque des revendications précédentes, **caractérisé par** un bac récupérateur (23), placé au-delà de l'évacuation d'air (20).

8. Appareil selon l'une quelconque des revendications précédentes, **caractérisé en ce que** l'évacuation d'air se termine en canaux de distribution d'air (21) possédant des évacuations (22) vers l'espace de conditionnement, lesdites évacuations étant dotées d'un matériau tissé ouvert perméable à l'air.

9. Appareil selon l'une quelconque des revendications précédentes, **caractérisé par** un dispositif de chauffage relié à l'évacuation d'air.

10. Agencement de stockage d'aliments, comprenant un espace de conditionnement (50) et un appareil de traitement d'air (10) selon l'une quelconque des revendications 1 à 9, destiné à traiter l'air dans l'espace de conditionnement.

11. Agencement de stockage d'aliments selon la revendication 10, **caractérisé en ce que** l'appareil de traitement d'air (10) est placé dans l'espace de conditionnement (50).

12. Agencement de stockage d'aliments selon la revendication 10, **caractérisé en ce que** l'appareil de traitement d'air (10) est placé hors de l'espace de conditionnement (50).

13. Agencement de stockage selon l'une quelconque des revendications 10 à 12, **caractérisé par** des admissions d'air (22) reliées à l'évacuation d'air (20) de l'appareil (10) et situées de manière adjacente à un casier d'entreposage placé dans l'espace de conditionnement (50).
